# EUROPEAN PATENT SPECIFICATION

(11) **EP 2 961 597 B1**
(45) Date of publication and mention of the grant of the patent: **17.02.2021**
(21) Application number: 14709111.0
(22) Date of filing: 24.02.2014
(51) Int. Cl.: B32B 17/06, E04C 2/54

(54) **METHODS AND STRUCTURES FOR REDUCING BIAXIAL BENDING AND/OR TWISTING OF FLEXIBLE GLASS SUBSTRATES**
VERFAHREN UND STRUKTUREN ZUR VERMINDERUNG VON BIAXIALEM VERBIEGEN UND/ODER VERDREHEN FLEXIBLER GLASSUBSTRATE
MÉTHODES POUR LA CRÉATION DE STRATIFIÉS FLEXIBLES EN VERRE/POLMÈRE MAINTENANT LEUR FORME

(30) Priority: 27.02.2013 US 201361770015 P
(43) Date of publication of application: 06.01.2016
(73) Proprietor: Corning Incorporated, Corning, New York 14831 (US)
(72) Inventor: BRYCHELL, Joseph Gerard, Ponte Vedra Beach, Florida 32082 (US); GARNER, Sean Matthew, Elmira, New York 14905 (US); GERBER, Kurt Edward, Dansville, New York 14437 (US); GOPALAKRISHNAN, Karthik, Corning, New York 14830 (US)
(74) Representative: Sturm, Christoph
(86) International application number: PCT/US2014/017887
(87) International publication number: WO 2014/133925

(56) References cited:
- EP-A1- 2 236 281
- WO-A2-2011/033546
- CN-U- 202 378 355
- DE-A1-102009 021 938
- FR-A- 836 776
- JP-A- 2001 113 631
- US-A- 2 758 342
- US-A- 3 089 801
- US-A1- 2006 292 364
- US-A1- 2009 311 497

## Description

### FIELD

The present invention relates to flexible glass substrates and, more particularly, to methods for reducing biaxial bending and twisting of flexible glass substrates.

### BACKGROUND

Interest in flexible glass substrates is increasing for a variety of applications, such as touch sensors, color filters and photovoltaic (PV) covers. Although the flexible glass substrates may not come into direct contact with the environment when in a packaged device, the flexible glass substrates should be capable of withstanding various impact and drop events at different angles. For use as covers for PV modules and other electronics, the flexible glass substrates likewise should be capable of surviving a variety of impacts to an outwardly facing surface of the packaged device. Achieving mechanical reliability for these applications includes both minimizing defects in the flexible glass substrates as well as controlling stresses. Defects in the flexible glass substrates can be reduced through handling techniques after forming to reduce contact damage to surfaces or edges of the flexible glass substrates. Stresses that occur in the flexible glass substrates after final device packaging can be controlled though packaging design and coating selection. Various other methods for controlling stresses in the flexible glass substrates are desired.

US 3 089 801 A is directed to glass having a thickness of about 25 microns to about 250 microns (0.001 to 0.010 inch). US 3 089 801 discloses a layer, or layers, of polymer and metal laminated together with the thin glass layer. The layers all have the same size.

US 2 758 432 A is directed to plastic mullions used as reinforcing strips to strengthen windows in high-damage areas. US 2006/0292364 A1 is directed to reinforcing strips for building windows in the event of a hurricane.

### SUMMARY

One technique to improve the mechanical reliability of bare flexible glass is to control bending of the flexible glass substrates. Depending on the mechanical strength requirements and the expected bending stresses and direction of the end application, according to the concepts disclosed herein, a flexible glass structure can be designed to meet various shape and mechanical requirements. In particular, flexible glass structures can be formed having predictable stress patterns due to controlled bending.

Additional features and advantages will be set forth in the detailed description which follows, and in part will be readily apparent to those skilled in the art from the description or recognized by practicing the invention as exemplified in the written description and the appended drawings. It is to be understood that both the foregoing general description and the following detailed description are merely exemplary of the invention, and are intended to provide an overview or framework to understanding the nature and character of the invention as it is claimed.

The accompanying drawings are included to provide a further understanding of principles of the invention, and are incorporated in and constitute a part of this specification. The drawings illustrate one or more embodiment(s), and together with the description serve to explain, by way of example, principles and operation of the invention.

### BRIEF DESCRIPTION OF THE DRAWINGS

FIG. 1 is a schematic illustration of an embodiment of a flexible glass structure having stiffening layer;
FIG. 2 is a schematic illustration of another embodiment of a flexible glass structure having stiffening layer;
FIG. 3 is a schematic illustration of another embodiment of a flexible glass structure having stiffening layer;
FIG. 4 is a schematic illustration of another embodiment of a flexible glass structure having stiffening layer;
FIG. 5 is a schematic illustration of another embodiment of a flexible glass structure having stiffening layer;
FIG. 6 is a schematic illustration of a flexible glass structure including a flexible glass substrate having an initial curvature;
FIG. 7 is a schematic illustration of another embodiment of a flexible glass structure having stiffening layer;
FIG. 8 is a schematic illustration of another embodiment of a flexible glass structure having stiffening layer;
FIG. 9 is a schematic illustration of an apparatus and method for controlling bending of a flexible glass structure; and
FIG. 10 illustrates an embodiment of a stiffening layer carried on a releasable backing layer.

### DETAILED DESCRIPTION

In the following detailed description, for purposes of explanation and not limitation, example embodiments disclosing specific details are set forth to provide a thorough understanding of various principles of the present invention. Moreover, descriptions of well-known devices, methods and materials may be omitted so as not to obscure the description of various principles of the present invention. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein-for example up, down, right, left, front, back, top, bottom-are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

Flexible glass substrates, when starting from an original, flat state can bend equally well along various different bend axes during uniaxial flexure (assuming the flexible glass substrate is an amorphous material and its properties are isotropic). Flexible glass substrates frequently experience higher stresses when bending along different axes simultaneously during biaxial flexure. During impact, drop or handling events, unpredictable biaxial flexure of the packaged flexible glass substrates may occur, which can result in damage to the flexible glass substrates. As described herein, it can be beneficial if the flexible glass substrates can preferentially bend in a single, predictable uni-axial bend state during impact, drop and handling events or be restricted from bending in any direction including torsion. This can create more predictable stress patterns in the flexible glass substrates. Asymmetric coatings and packaging designs can be used to create predetermined preferred bend states in the flexible glass substrates.

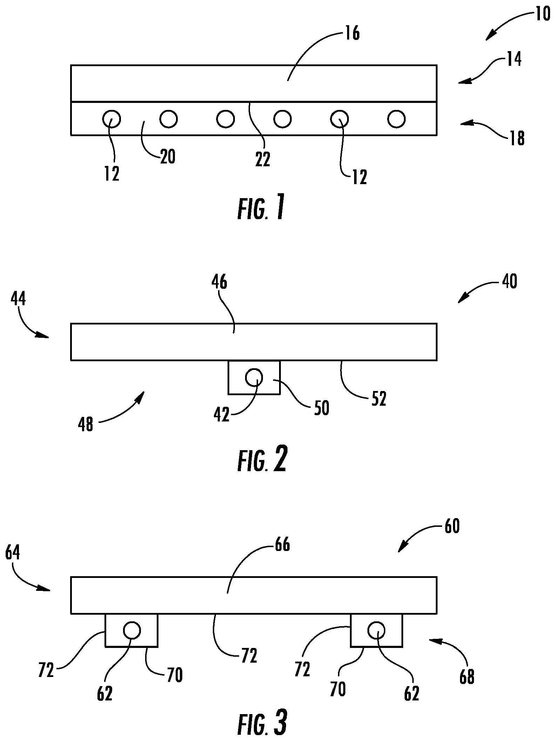

Referring to FIG. 1, a flexible glass structure 10, shown in cross-section, has a preferred bend axis that is substantially parallel to stiffening elements 12, i.e., perpendicular to the plane of the figure. The flexible glass structure 10 includes a first outermost layer 14 that is formed by a flexible glass substrate 16 and a second outermost stiffening layer 18 that is formed by a coating material 20. The coating material 20 can be a polymer, organic and/or silicone coating. In the illustrated embodiment, the coating material 20 extends across an entire surface 22 of the flexible glass substrate 16. In other embodiments, the coating material may extend over only a portion (FIG. 2) or over multiple portions (FIG. 3) of the flexible glass substrate 16. The coating may be located at other locations of the flexible glass substrate 16, which will be described in greater detail below.

The flexible glass substrates described herein may have a thickness of 0.3 mm or less including but not limited to thicknesses of, for example, about 0.01-0.05 mm, about 0.05-0.1 mm, about 0.1-0.15 mm, about 0.15-0.3 mm, including 0.3, 0.275, 0.25, 0.225, 0.2, 0.19, 0.18, 0.17, 0.16, 0.15, 0.14, 0.13, 0.12, 0.11, 0.10, 0.09, 0.08 0.07, 0.06, 0.05, 0.04, 0.03, 0.02, or 0.01 mm. The flexible glass substrates may be formed of glass, a glass ceramic, a ceramic material or composites thereof. A fusion process (e.g., down draw process) that forms high quality flexible glass substrates can be used in a variety of devices such as flat panel displays. Flexible glass substrates produced in a fusion process may have surfaces with superior flatness and smoothness when compared to glass sheets produced by other methods. A fusion process is described in U.S. Patent Serial Nos. 3,338,696 and 3,682,609. Other suitable flexible glass substrate forming methods include a float process, updraw and slot draw methods.

The stiffening elements 12 are part of the stiffening layer 18 and can be formed of a material that is different from the coating material 20. Inorganic materials, for example, glass fiber or metal wire can be used as the stiffening elements 12. While the stiffening elements 12 are illustrated as round in cross-section, they may be of any suitable shape, such as polygonal, or random in shape. The stiffening elements 12 may be formed of a material having a significantly higher (e.g., about 2, 4, 5, 8, 10, 15, 20 times higher) Young's modulus than the coating material 20. For example, the coating material 20 may have a Young's modulus of less than about one GPa and the material forming the stiffening elements 12 may have a Young's modulus of greater than about 10 GPa. For another example, the coating material 20 may have a Young's modulus of less than about 20 GPa and the material forming the stiffening elements 12 may have a Young's modulus of greater than about 40 GPa.

The stiffening elements 12 may be formed of a material with a different time response to mechanical events than the coating material 20. In the claimed embodiments, the stiffening elements 12 are formed of a shear thickening material (a dilatant non-Newtonian fluid), for example, that is patterned or arranged into substantially parallel lines. An example of a shear thickening fluid is silica nano-particles dispersed in a solution of poly(ethylene glycol). An example of another shear thickening material is Silly Putty® or a polymer elastomeric foam made of intelligent molecules. During a sudden impact event, the shear thickening material can resist bending along an axis perpendicular to the patterned lines. During relatively slow events, the shear thickening material can allow bending in either bend direction (i.e., parallel and transverse to the patterned lines). Use of such shear thickening materials can allow for bending of the flexible glass substrate 16 along multiple axes during relatively slow events, such as device assembly or installation. During relatively sudden events like surface impact or drop, the shear thickening material establishes a preferred uni-axial bend direction. An example of an impact event is what occurs during ball drop mechanical testing. This can allow dissipation of the impact energy, while allowing flexible glass substrate 16 to bend in a manner that reduces stress.

Referring to FIG. 2, another embodiment of a flexible glass structure 40 has a preferred bending axis that is substantially parallel to stiffening element 42, i.e., perpendicular to the plane of the page. The flexible glass structure 40 includes a first outermost layer 44 that is formed by a flexible glass substrate 46 and a second outermost stiffening layer 48 that is formed by a coating material 50 and the stiffening element 42. In the illustrated embodiment, the coating material 50 extends across only a portion of a surface 52 of the flexible glass substrate 46. The extent to which the flexible glass substrate 46 and the stiffening layer 48 extend in the direction of the preferred bending axis may be about the same or different, and when different either may be longer or shorter than the other depending upon the ultimate application of the glass structure 40.

Referring to FIG. 3, another embodiment of a flexible glass structure 60 has a preferred bending axis that is substantially parallel to stiffening elements 62, i.e., perpendicular to the plane of the page. The flexible glass structure 60 includes a first outermost layer 64 that is formed by a flexible glass substrate 66 and a second outermost stiffening layer 68 that is formed by a coating material 70 and the stiffening elements 72. In the illustrated embodiment, the coating material 70 extends across only a portion of a surface 72 of the flexible glass substrate 66 as spaced-apart strips 72 of coating material.

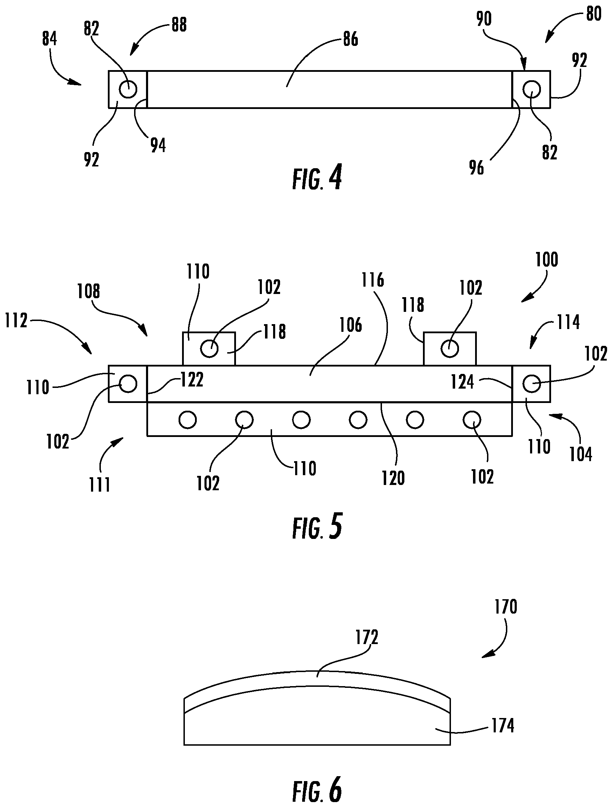

Referring to FIG. 4, another embodiment of a flexible glass structure 80 has a preferred bending axis that is substantially parallel to stiffening elements 82. The flexible glass structure 80 includes a first outermost layer 84 that is formed by a flexible glass substrate 86 and edge stiffening layers 88 and 90 that are formed by a coating material 92 and the stiffening elements 82. In the illustrated embodiment, the coating material 92 and the stiffening elements 82 extend along side edges 94 and 96 of the flexible glass substrate 86. While the coating material 92 is illustrated as being flush with the side edges 94 and 96, the coating material may extend over the side edges or extend over only part of the side edges 94 and 96.

Referring to FIG. 5, any combination of the above flexible glass structure configurations may be utilized to control bending of the flexible glass substrate. For example, FIG. 5 illustrates a flexible glass structure 100 having a preferred bending axis that is substantially parallel to stiffening elements 102, i.e., perpendicular to the plane of the page. In this example, the flexible glass structure 100 includes an intermediate layer 104 formed be a flexible glass substrate 106, a first outermost stiffening layer 108 that is formed by a coating material 110 and the stiffening elements 102, a second outermost stiffening layer 111 that is formed by the coating material 110 and the stiffening elements 102, and edge stiffening layers 112 and 114 that are formed by the coating material 110 and stiffening elements 102. The first outermost stiffening layer 108 includes the coating material 110 that extends across only a portion of a surface 116 of the flexible glass substrate 106 as spaced-apart strips 118. The second outermost stiffening layer 111 includes the coating material 110 that extends across an entire surface 120 of the flexible glass substrate 106. The edge stiffening layers 112 and 114 include the coating material 110 that extend along side edges 122 and 124.

Referring to FIG. 6, in another embodiment, a flexible glass structure 170 includes a flexible glass substrate 172 having an initial curvature that creates a preferred bend state in the flexible glass substrate 172. From a flat state, an equal amount of force is required to bend the flexible glass substrate 172 along any of the bend axes. This can create a situation where the bend direction during an impact or drop event is random or susceptible to biaxial flexure or torsion. By creating an initial bend in the flexible glass substrate 172, as shown, a preferred bend shape is provided along a predetermined axis. The predetermined bend axis can be established by slightly curving the flexible glass substrate 172 when it is initial installed in a device packaging 174. As shown in FIG. 6, the predetermined bending axis would be perpendicular to the plane of the page. In order to provide an initial curve to the flexible glass substrate 172, the device packaging 174 may be disposed over the entire area of the flexible glass substrate 172 or only a portion thereof. Additionally, although shown as coterminous in the direction of an axis within the plane of the page, the device packaging 174 may extend beyond the flexible glass substrate 172, or the flexible glass substrate 172 may extend beyond the device packaging 174. During impact or drop, the flexible glass substrate 172 will have a tendency to curve further in this bend direction rather than into a different bend direction. The initial curvature of the flexible glass substrate 172 creates an induced stiffness that resists bending along an axis parallel to the initial bend axis.

FIGS. 2-6 illustrate exemplary flexible glass structure configurations having controlled bending characteristics. Any combination of coating materials, coating locations, layers and stiffening elements may be used. For example, different types of stiffening elements and/or coating materials may be used for different layers.

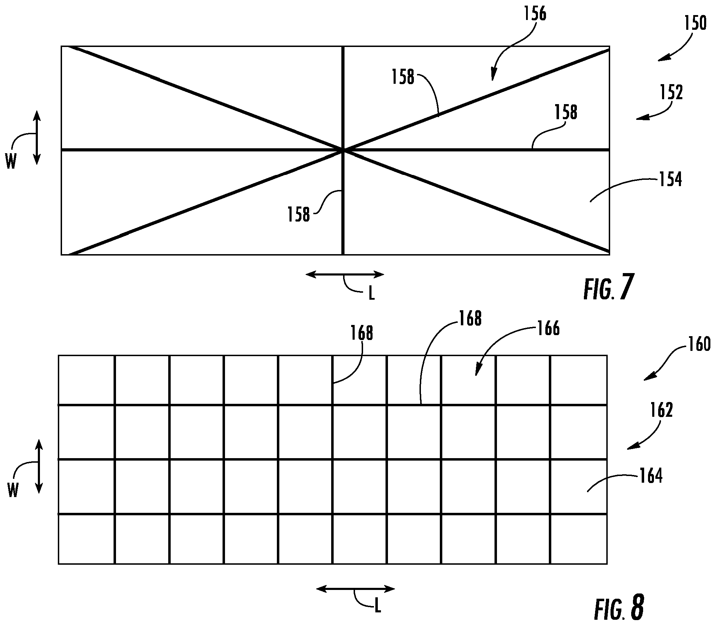

While coatings and/or stiffening elements (stiffening layers) may be patterned to provide a preferred uni-axial bend axis, they may also be used to limit or reduce any bending or particularly twisting of flexible glass substrates. Referring to FIG. 7, a flexible glass structure 150 includes a first outermost layer 152 that is formed by a flexible glass substrate 154 and a second outermost stiffening layer 156 formed of stiffening elements 158. In this embodiment, the stiffening elements 158 are formed as relatively narrow strips, some running lengthwise along a length L of the flexible glass substrate 154, some running widthwise along a width W of the flexible glass substrate 154 and some running diagonally in both the widthwise and lengthwise directions.

Referring now to FIG. 8, another flexible glass structure 160 includes a first outermost layer 162 that is formed by a flexible glass substrate 164 and a second outermost stiffening layer 166 that is formed of stiffening elements 168. In this embodiment, the stiffening elements 168 are formed as relatively narrow strips in the form of a grid pattern with some strips running lengthwise along a length L of the flexible glass substrate 164 and some running widthwise along a width W of the flexible glass substrate 154.

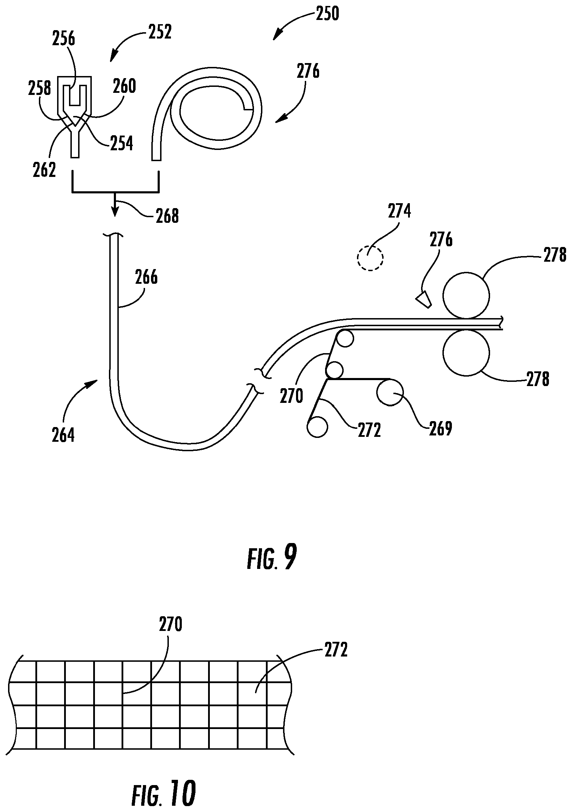

While the flexible glass substrates described above are illustrated as flexible glass sheets, continuous flexible glass substrates may be used to form the flexible glass structures having controlled bending and/or twisting, such as a roll or fabrication (e.g., down draw) process. FIG. 9, for example, illustrates two example sources 250 of flexible glass substrate, although other sources may be provided. For instance, the source 250 can include a down draw glass forming apparatus 252. As schematically shown, the down draw glass forming apparatus 252 can include a forming wedge 254 at a bottom of a trough 256 , wherein glass flows down opposite sides 258 and 260 of the forming wedge 254. The two sheets of molten glass are subsequently fused together as they are drawn off root 262 of the forming wedge 254. As such, the flexible glass substrate 266, in the form of a flexible glass ribbon, may be fusion drawn to traverse in a downward direction 268, off the root 254 of the forming wedge 254 and directly into a downward zone 264 positioned downstream of the down draw glass forming apparatus.

After forming, the flexible glass substrate 266 may be further processed, such as by cutting, trimming, etc. The flexible glass substrate 266, in the form of the continuous flexible glass ribbon, may be delivered or directed to a stiffening layer roll 269. The stiffening layer roll 269 may include a patterned layer of stiffening elements 270, for example, on a releasable backing sheet 272 (see FIG. 10). In some embodiments, there may be multiple stiffening layer rolls (e.g., see stiffening layer roll 274) for applying stiffening elements to multiple sides and/or edges of the flexible glass substrate 266. Heat from heater 276, for example, and/or pressure from pressure rolls 278, for example, may be used to attach the stiffening elements 270 to the flexible glass substrate 266.

Another example source 250 of the flexible glass substrate 266 can include a coiled spool 276 of the flexible glass substrate 266. For example, the flexible glass substrate 266 may be wound into the coiled spool 276 after being drawn into a flexible glass ribbon, for example using the down draw glass forming apparatus 252. Thus, if the source 250 includes the coiled spool 276, the flexible glass substrate 266 may be uncoiled from the coiled spool 276 to traverse in the downward direction 268 into the downward zone 264. Other arrangements are possible, such as uncoiling the flexible glass substrate in a horizontal direction.

The flexible glass structures described herein may be used as a substrate for mounting device-functional layers, or may be used as an encapsulant layer or barrier layer within a device. The device may be an electronic device, for example, a display screen (including a Liquid Crystal Display, a Plasma Display, an Organic Light Emitting Diode display, flat panel display, for example), a lighting-emitting device, or a solar cell module. The functional layers may include, for example, thin film transistors (TFTs), diodes, photodiodes, triodes, photovoltaic cells, photocouplers, transparent electrodes, color filter, or an electroconductive layer. The flexible glass structures may be used as a cover laminated onto the display screens. The flexible glass structures may be used as a substrate/encapsulant not only for OLEDs (small molecule fluorescence (SMF) and (LEP) light emitting polymers) but for other devices including an electrically active layer e.g. organic photo-detectors, organic solar-cells, thin-film-transistor (TFT) arrays and TFTs for OLEDs. Another use is for LEP products such as un-patterned backlights and other light sources or patterned devices such as signs, alphanumeric displays or dot-matrix and other high-resolution displays.

The flexible glass structures may be a substantially transparent structure for use as a protective element in an electronic device, wherein the flexible glass structure is a composite structure comprising a layer of glass of a thickness from 5 to 300 micrometer, and a stiffening layer ranging in thickness from 50 micrometer to 1 cm or more.

The glass and stiffening layers can be provided in sheet form according to a batch process. Alternatively, the glass layer can be provided in sheet form and the stiffening layer from a continuous roll, or vice versa. As a further possibility, both glass and stiffening layers are from continuous rolls. The composite structure can be formed by lamination of the glass and stiffening layers, e.g. according to a batch process, a continuous roll-to-roll process or a semi-continuous process whereby the stiffening layer is a continuous film and the glass layer is in sheet form. The glass and/or stiffening layers may be of constant thickness, or may be of varying thicknesses.

For the stiffening layer, it is possible to use polymers which can be deposited/coated as pre-polymers or pre-compounds and then converted, such as epoxy-resins, polyurethanes, phenol-formaldehyde resins, and melamine-formaldehyde resins. Optically clear and transparent materials may be used, for example, for PV modules. The lamination of the glass and stiffening layers can be with glue/adhesive in between the layers. In that case, adhesive can be pre-coated onto one of the two or on both substrates; or supplied during the lamination process, at room or elevated temperature and with or without pressure. UV-cured glues are also suitable. Lamination and/or deposition of the stiffening layer onto the glass layer can be integrated in the fabrication process of the glass, i.e. glass comes off the fabrication line and is then (still hot or warm or cold) coated with the polymer.

In some situations, the stiffening element can be formed from a single patterned material instead of including a distinctly separate stiffening elements and coating material. For example in FIG. 2, the stiffening element may be formed by patterning a polymeric coating material into a ridge structure. In this case, the stiffening element 42 and the coating material 50 become the same element. The same element performs both functions of the coating and stiffening elements. The stiffening elements may be a series of patterned corrugated ridges of polymeric or other coating material that resist bending in a particular direction. The stiffening element may be a separately defined element or its function may be included within a patterned coating material.

To perform as a stiffening element, the stiffening element or the patterned coating serving as a stiffening element will have a thickness greater than 1 µm. For example, the element will have a thickness greater than 1 µm, greater than 2 µm, greater than 5 µm, or greater than 10 µm. Also, the stiffening element will cause a larger force to be required to bend the flexible glass along an axis perpendicular to the stiffening element direction compared to parallel to the stiffening element direction. For example, the stiffening element will increase the comparative bending force along an axis perpendicular to its axis by greater than 1%, greater than 5%, greater than 10%, greater than 20%, or greater than 50%.

The coating materials may be made of a composite material such as a polymer dispersed with nano-particles. Also, the coating material and the stiffening element do not need to be directly adhered to the flexible glass surface. Intermediate layers may be present between the coating/stiffening elements and the glass surface. For example, the flexible glass may have multiple electronic device or optical layers deposited or patterned onto its surface. These could include: ITO, anti-reflection coatings, touch sensor devices, display devices, photovoltaic devices, reflection coatings, metal or dielectric layers, polymer coatings or structures. This coating and stiffening elements could then be applied on top of these layers so as to be near, and coupled to, but not immediately contacting the flexible glass surface.

As an alternative to formation by lamination, the stiffening layer of the composite may be coated onto the glass layer by a batch or continuous process. Coating of the coating material onto the glass can be by dip, spray, solution-spin, solution-blade, meniscus coating, or by coating of a molten polymer onto the glass layer. That is, it is possible to consider the different situations (i) where coating material exists already as film and is laminated to the glass and (ii) where coating material is not in film form but is coated onto the glass by dip, spray, etc. Pre-polymers are amenable to case (ii). However, several of the other coating materials above can be coated for case (ii). In this instance the coating materials can be coated onto the glass principally by: coating from solution, from a melt or as pre-polymer.

In manufacture of an electronic device, it is usually necessary to subject some or all of the layers to processing steps. For example, if there is present an electroluminescent organic material that is a semiconductive conjugated polymer such as poly(phenylene vinylene) (PPV) then the deposition of that layer would normally take place by depositing a precursor to the polymer in a solvent, for example by spin-coating, and then subjecting that layer to a subsequent processing step to convert the precursor to the final polymer. Thus, the underlying flexible glass structure, if present during these processing steps, must be able to withstand the solvents used for spin-coating the precursor layer and the subsequent temperatures used for driving off the solvent and converting the precursor to the polymer. Thus, the stiffening layer of the flexible glass structure needs to be of appropriate qualities. For example, if the flexible glass structure is to be subjected to high temperatures, then the glass-transition temperature of the stiffening layer (and the working temperature of any adhesive used) should be above those temperatures. For example, a temperature of in excess of 150 °C. is possible. Moreover, in certain situations, the stiffening layer should be resistant to the solvent layers used for the polymers, such as mixed xylene, THF, used for soluble conjugated polymers such as MEH PPV.

In addition to electronic devices, the above-described flexible glass structure may be used in other areas, such as architectural surface decoration, protective coatings, electrochromatic windows, fire resistant surfaces and in various configurations of multi-stack structures required to meet ballistic glazing requirements. Similarly, the flexible glass structure laminate structures could act as a barrier material to protect films, structures and/or devices from oxygen and moisture ingress/permeation for applications such as organic/thin film, PV, OLED display and lighting.

It should be emphasized that the above-described embodiments of the present invention, particularly any "preferred" embodiments, are merely possible examples of implementations, merely set forth for a clear understanding of various principles of the invention. Many variations and modifications may be made to the above-described embodiments of the invention without departing substantially from the spirit and various principles of the invention. All such modifications and variations are intended to be included herein within the scope of this disclosure and the present invention and protected by the following claims.

For example, although any particular embodiment of a stiffening layer is shown being coupled to only one flexible glass substrate, such need not be the case. Instead, any particular embodiment of stiffening layer may be coupled to two or more flexible glass substrates. For example, flexible glass substrates may be disposed on opposite sides of a stiffening layer so that the substrates are in generally parallel arrangement. Alternatively, two or more flexible glass substrates may be disposed serially along the length of one stiffening layer.

## Claims

1. A flexible glass structure (10, 40, 60, 80, 100, 170, 150, 160), comprising:
a flexible glass substrate (16, 46, 66, 86, 106, 172, 154, 164) having a thickness of ≤ 0.3 mm; and
a stiffening layer (18, 48, 68, 88, 90, 108, 111,112, 114, 156, 166) coupled to a surface of the flexible glass substrate (16, 46, 66, 86, 106, 172, 154, 164), the stiffening layer (18, 48, 68, 88, 90, 108, 111,112, 114, 156, 166) comprising at least one stiffening element (12, 42, 62, 72, 82, 102, 158, 168) extending along the surface of the flexible glass substrate (16, 46, 66, 86, 106, 172, 154, 164) in a running direction having a Young's modulus selected to provide a preferred bending axis of the flexible glass substrate (16, 46, 66, 86, 106, 172, 154, 164) in a direction substantially parallel to the running direction of the stiffening element (12, 42, 62, 72, 82, 102, 158, 168), wherein the stiffening element (12, 42, 62, 72, 82, 102, 158, 168) comprises a shear thickening material.

2. The flexible glass structure of claim 1, wherein the stiffening layer (18, 48, 68, 88, 90, 108, 111,112, 114) further comprises a coating material (20, 50, 70, 92, 110).

3. The flexible glass structure of claim 2, wherein the stiffening element (12, 42, 62, 72, 82, 102) is encapsulated in the coating material (20, 50, 70, 92, 110).

4. The flexible glass structure of claim 2, wherein the stiffening element (12, 42, 62, 72, 82, 102) has a Young's modulus greater than a Young's modulus of the coating material (20, 50, 70, 92, 110).

5. The flexible glass structure of claim 4, wherein the stiffening element (12, 42, 62, 72, 82, 102) has a Young's modulus of ≥ 10 GPa and the coating material (20, 50, 70, 92, 110) has a Young's modulus of ≤ 1 GPa.

6. The flexible glass structure of claim 4, wherein the stiffening element (12, 42, 62, 72, 82, 102) has a Young's modulus of ≥ 40 GPa and the coating material (20, 50, 70, 92, 110) has a Young's modulus of ≤ 20 GPa.

7. The flexible glass substrate of claim 1 comprising multiple stiffening elements (12, 42, 62, 72, 82, 102, 158, 168), the multiple stiffening elements being spaced-apart from and parallel to each other.

8. The flexible glass substrate of claim 1, the stiffening layer further comprising:
a second stiffening element (158, 168) extending along the surface of the flexible glass substrate in a second direction that is different than the running direction;
wherein the first and second stiffening elements (158, 168) extend in the running and second directions, respectively, and have respective Young's moduli selected to inhibit twisting or bi-axial bending of the flexible glass substrate (150, 160).

9. A method of controlling bending of a flexible glass structure, the method comprising:
arranging at least one stiffening element (12, 42, 62, 72, 82, 102, 158, 168) adjacent to a surface of a flexible glass substrate (16, 46, 66, 86, 106, 172, 154, 164) having a thickness of ≤ 0.3 mm along a running direction; and
coupling the at least one stiffening element (12, 42, 62, 72, 82, 102, 158, 168) to the surface along the running direction, the at least one stiffening element (12, 42, 62, 72, 82, 102, 158, 168) having a Young's modulus selected to provide a preferred bending axis of the flexible glass substrate in a direction substantially parallel to the running direction of the at least one stiffening element (12, 42, 62, 72, 82, 102, 158, 168), wherein the stiffening element (12, 42, 62, 72, 82, 102, 158, 168) comprises a shear thickening material.

10. The method of claim 9, wherein the step of coupling includes encapsulating the at least one stiffening element (12, 42, 62, 72, 82, 102) in a coating material (20, 50, 70, 92, 110) that bonds to the surface of the flexible glass substrate.

## Patentansprüche

1. Flexible Glasstruktur (10, 40, 60, 80, 100, 170, 150, 160), die Folgendes aufweist:
ein flexibles Glassubstrat (16, 46, 66, 86, 106, 172, 154, 164) mit einer Dicke von ≤ 0,3 mm; und
eine mit einer Oberfläche des flexiblen Glassubstrats (16, 46, 66, 86, 106, 172, 154, 164) verbundene Versteifungsschicht (18, 48, 68, 88, 90, 108, 111, 112, 114, 156, 166), wobei die Versteifungsschicht (18, 48, 68, 88, 90, 108, 111, 112, 114, 156, 166) zumindest ein sich entlang der Oberfläche des flexiblen Glassubstrats (16, 46, 66, 86, 106, 172, 154, 164) in eine Laufrichtung erstreckendes Versteifungselement (12, 42, 62, 72, 82, 102, 158, 168) aufweist, das einen Elastizitätsmodul aufweist, der zur Bereitstellung einer bevorzugten Biegeachse des flexiblen Glassubstrats (16, 46, 66, 86, 106, 172, 154, 164) in eine weitestgehend parallel zu der Laufrichtung des Versteifungselements (12, 42, 62, 72, 82, 102, 158, 168) verlaufende Richtung ausgewählt ist, wobei das Versteifungselement (12, 42, 62, 72, 82, 102, 158, 168) einen scherverdickenden Stoff aufweist.

2. Flexible Glasstruktur nach Anspruch 1, wobei die Versteifungsschicht (18, 48, 68, 88, 90, 108, 111, 112, 114,) ferner einen Beschichtungsstoff (20, 50, 70, 92, 110) aufweist.

3. Flexible Glasstruktur nach Anspruch 2, wobei das Versteifungselement (12, 42, 62, 72, 82, 102) ferner in dem Beschichtungsstoff (20, 50, 70, 92, 110) eingekapselt ist.

4. Flexible Glasstruktur nach Anspruch 2, wobei das Versteifungselement (12, 42, 62, 72, 82, 102) einen Elastizitätsmodul aufweist, der größer als der Elastizitätsmodul des Beschichtungsstoffs (20, 50, 70, 92, 110) ist.

5. Flexible Glasstruktur nach Anspruch 4, wobei das Versteifungselement (12, 42, 62, 72, 82, 102) einen Elastizitätsmodul von ≥ 10 GPa aufweist und der Beschichtungsstoff (20, 50, 70, 92, 110) einen Elastizitätsmodul von ≤ 1 GPa aufweist.

6. Flexible Glasstruktur nach Anspruch 4, wobei das Versteifungselement (12, 42, 62, 72, 82, 102) einen Elastizitätsmodul von ≥ 40 GPa aufweist und der Beschichtungsstoff (20, 50, 70, 92, 110) einen Elastizitätsmodul von ≤ 20 GPa aufweist.

7. Flexibles Glassubstrat nach Anspruch 1, aufweisend mehrere Versteifungselemente (12, 42, 62, 72, 82, 102, 158, 168), wobei die mehreren Versteifungselemente voneinander beabstandet und zueinander parallel sind.

8. Flexibles Glassubstrat nach Anspruch 1, wobei die Versteifungsschicht ferner Folgendes aufweist:
ein zweites Versteifungselement (158, 168), das sich entlang der Oberfläche des flexiblen Glassubstrats in eine von der Laufrichtung verschiedene zweite Richtung erstreckt;
wobei das erste und zweite Versteifungselement (158, 168) sich in die Laufrichtung bzw. zweite Richtung erstrecken und jeweils einen Elastizitätsmodul aufweisen, der zum Verhindern von Verdrehen oder biaxialem Biegen des flexiblen Glassubstrats (150, 160) ausgewählt ist.

9. Verfahren zur Steuerung des Biegens einer flexiblen Glasstruktur, wobei das Verfahren Folgendes aufweist:
Anordnen von mindestens einem an eine Oberfläche eines flexiblen Glassubstrats (16, 46, 66, 86, 106, 172, 154, 164) mit einer Dicke von ≤ 0,3 mm angrenzenden Versteifungselement (12, 42, 62, 72, 82, 102, 158, 168) entlang einer Laufrichtung; und
Verbinden des zumindest einen Versteifungselements (12, 42, 62, 72, 82, 102, 158, 168) mit der Oberfläche entlang der Laufrichtung, wobei das zumindest eine Versteifungselement (12, 42, 62, 72, 82, 102, 158, 168) einen Elastizitätsmodul aufweist, der zur Bereitstellung einer bevorzugten Biegeachse des flexiblen Glassubstrats in eine weitestgehend parallel zu der Laufrichtung des zumindest einen Versteifungselements (12, 42, 62, 72, 82, 102, 158, 168) verlaufende Richtung ausgewählt ist, wobei das Versteifungselement (12, 42, 62, 72, 82, 102, 158, 168) einen scherverdickenden Stoff aufweist.

10. Verfahren nach Anspruch 9, wobei der Verbindungsschritt das Einkapseln des zumindest einen Versteifungselements (12, 42, 62, 72, 82, 102) in einem an die Oberfläche des flexiblen Glassubstrats bindenden Beschichtungsstoff (20, 50, 70, 92, 110) einschließt.

## Revendications

1. Structure de verre souple (10, 40, 60, 80, 100, 170, 150, 160), comprenant :
un substrat de verre souple (16, 46, 66, 86, 106, 172, 154, 164) ayant une épaisseur ≤ 0,3 mm ; et
une couche de raidissement (18, 48, 68, 88, 90, 108, 111, 112, 114, 156, 166) couplée à une surface du substrat de verre souple (16, 46, 66, 86, 106, 172, 154, 164), la couche de raidissement (18, 48, 68, 88, 90, 108, 111, 112, 114, 156, 166) comprenant au moins un élément de raidissement (12, 42, 62, 72, 82, 102, 158, 168) s'étendant le long de la surface du substrat de verre souple (16, 46, 66, 86, 106, 172, 154, 164) dans une direction d'extension ayant un module de Young choisi pour fournir un axe de flexion préféré du substrat de verre souple (16, 46, 66, 86, 106, 172, 154, 164) dans une direction sensiblement parallèle à la direction d'extension de l'élément de raidissement (12, 42, 62, 72, 82, 102, 158, 168), l'élément de raidissement (12, 42, 62, 72, 82, 102, 158, 168) comprenant un matériau s'épaississant par cisaillement.

2. Structure de verre souple de la revendication 1, dans laquelle la couche de raidissement (18, 48, 68, 88, 90, 108, 111, 112, 114) comprend en outre un matériau de revêtement (20, 50, 70, 92, 110).

3. Structure de verre souple de la revendication 2, dans laquelle l'élément de raidissement (12, 42, 62, 72, 82, 102) est encapsulé dans le matériau de revêtement (20, 50, 70, 92, 110).

4. Structure de verre souple de la revendication 2, dans laquelle l'élément de raidissement (12, 42, 62, 72, 82, 102) a un module de Young supérieur à un module de Young du matériau de revêtement (20, 50, 70, 92, 110).

5. Structure de verre souple de la revendication 4, dans laquelle l'élément de raidissement (12, 42, 62, 72, 82, 102) a un module de Young ≥ 10 GPa et le matériau de revêtement (20, 50, 70, 92, 110) a un module de Young ≤ 1 GPa.

6. Structure de verre souple de la revendication 4, dans laquelle l'élément de raidissement (12, 42, 62, 72, 82, 102) a un module de Young ≥ 40 GPa et le matériau de revêtement (20, 50, 70, 92, 110) a un module de Young ≤ 20 GPa.

7. Structure de verre souple de la revendication 1 comprenant de multiples éléments de raidissement (12, 42, 62, 72, 82, 102, 158, 168), les multiples éléments de raidissement étant espacés les uns des autres et parallèles les uns aux autres.

8. Structure de verre souple de la revendication 1, la couche de raidissement comprenant en outre :
un deuxième élément de raidissement (158, 168) s'étendant le long de la surface du substrat de verre souple dans une deuxième direction qui est différente de la direction d'extension ;
dans laquelle les premier et deuxième éléments de raidissement (158, 168) s'étendent dans la direction d'extension et la deuxième direction, respectivement, et ont des modules de Young respectifs choisis pour empêcher la torsion ou la flexion biaxiale du substrat de verre souple (150, 160).

9. Procédé de contrôle de la flexion d'une structure de verre souple, le procédé comprenant :
la mise en place d'au moins un élément de raidissement (12, 42, 62, 72, 82, 102, 158, 168) au voisinage d'une surface d'un substrat de verre souple (16, 46, 66, 86, 106, 172, 154, 164) ayant une épaisseur ≤ 0,3 mm le long d'une direction d'extension ; et
le couplage de l'au moins un élément de raidissement (12, 42, 62, 72, 82, 102, 158, 168) à la surface le long de la direction d'extension, l'au moins un élément de raidissement (12, 42, 62, 72, 82, 102, 158, 168) ayant un module de Young choisi pour fournir un axe de flexion préféré du substrat de verre souple dans une direction sensiblement parallèle à la direction d'extension de l'au moins un élément de raidissement (12, 42, 62, 72, 82, 102, 158, 168), l'élément de raidissement (12, 42, 62, 72, 82, 102, 158, 168) comprenant un matériau s'épaississant par cisaillement.

10. Procédé de la revendication 9, dans lequel l'étape de couplage comporte l'encapsulation de l'au moins un élément de raidissement (12, 42, 62, 72, 82, 102) dans un matériau de revêtement (20, 50, 70, 92, 110) qui se lie à la surface du substrat de verre souple.
